# EUROPÄISCHE PATENTSCHRIFT

(11) **EP 0 850 466 B1**
(45) Veröffentlichungstag und Bekanntmachung des Hinweises auf die Patenterteilung: **15.12.1999**
(21) Anmeldenummer: 96932479.7
(22) Anmeldetag: 06.09.1996
(51) Int. Cl.: G07F 17/32

(54) **UNTERHALTUNGSSPIELGERÄT, VORZUGSWEISE GELDSPIELGERÄT**
GAME APPARATUS FOR ENTERTAINMENT, PREFERABLY A PLAY-FOR-MONEY GAME APPARATUS
APPAREIL DE JEU DE DIVERTISSEMENT, DE PREFERENCE APPAREIL DE JEU A SOUS

(30) Priorität: 15.09.1995 DE 19534305
(43) Veröffentlichungstag der Anmeldung: 01.07.1998
(73) Patentinhaber: NSM AKTIENGESELLSCHAFT, 55411 Bingen (DE)
(72) Erfinder: BALLHORN, Karsten, D-55595 Dalberg (DE); SCHATTAUER, Jürgen, D-55595 Hüffelsheim (DE)
(74) Vertreter: Gossel, Hans K., Dipl.-Ing.
(86) Internationale Anmeldenummer: EP9603926
(87) Internationale Veröffentlichungsnummer: WO9710578

(56) Entgegenhaltungen:
- EP-A- 0 070 613
- EP-A- 0 579 505
- US-A- 4 240 635
- US-A- 4 321 673

## Beschreibung

Die Erfindung betrifft ein Unterhaltungsspielgerät nach dem Oberbegriff des Patentanspruchs 1 und 2.

Geldspielgeräte bestehen üblicherweise aus mehreren rotierenden Walzen oder Scheiben, auf deren Mänteln oder Sektoren Spielsymbole angebracht sind, die nach einem zufallsgesteuerten Stillsetzen der Walzen oder Scheiben in Fenstern einer Frontplatte des Geldspielgeräts erscheinen und deren Kombinationen über Gewinn und Verlust entscheiden, wobei neben Geldgewinnen unterschiedlicher Höhe Sonderspiele gewonnen werden können und zur Erhöhung des Spielanreizes Risikoleitern, Jackpotgewinne, Sonderausspielungen und Gewinnchancen erhöhende Spielvarianten vorgesehen sein können. Es ist bekannt, statt mechanisch angetriebener, die Spielsymbole tragender Walzen oder Scheiben und der zugehörigen Frontplattengestaltung, in deren Fenstern die Kombinationen der Spielsymbole erscheinen, Monitore vorzusehen, auf denen aufgrund gespeicherter Videofilme das übliche Geschehen von Geldspielgeräten in simulierter Form dargestellt wird.

Aus der EP-A-0070613 ist eine sogenannte "fruit machine" mit vier rotierenden Walzen bekannt, wobei die Darstellung der rotierenden Walzen auf einem Bildschirm durch eine Steuereinheit simuliert wird. Die Ansteuerung der Walzen erfolgt in der bekannten Form in Abhängigkeit von einem Zufallsgenerator, so daß das Unterhaltungsspielgerät gegenüber herkömmlichen Unterhaltungsspielgeräten keine mechanischen Teile mehr aufweist.

Aufgabe der Erfindung ist es, ein Unterhaltungsspielgerät der eingangs angegebenen Art zu schaffen, das den Spieler aus der Beobachtung mechanisch angetriebener Walzen oder Scheiben und Frontplattengestaltungen mit Lauflichtern und/oder unterschiedlich beleuchteten Fenstern löst und in eine auf dem Monitor simulierte Umgebung versetzt, in der er in anregender Weise Spiele oder Handlungsabläufe verfolgen und/oder gestalten und/oder in diese eingreifen kann.

Diese Aufgabe wird durch die Patentansprüche 1 und 2 gelöst. Die erfindungsgemäße Lösung nach dem Patentanspruch 1 kennzeichnet sich dadurch aus, daß die Bildelemente zu flimartigen Szenenabläufen zusammensetzbar sind und daß die Steuervorrichtung einen Zufallsgenerator umfaßt, mit dem die Zusammensetzung der Bildelemente innerhalb der Szenenabläufe und/oder die Reihenfolge der Szenenabläufe zufällig steuerbar ist. Gegenüber einem gattungsgemäßen Unterhaltungsspielgerät werden auf dem Bildschirm also nicht nur mechanische Komponenten simuliert, sondern es sind filmartige Szenenabläufe darstellbar, die wiederum von einem Zufallsgenerator zufallsgesteuert werden. Im Falle der Ausgestaltung als Geldspielgerät ist ein Speicher mit einer darin enthaltenen Gewinntabelle vorgesehen, die aufgrund eines vorgegebenen Gewinnplans durch Vergleich mit der jeweils erzielten Kombination der Bildelemente über Gewinn oder Verlust entscheidet.

Demgegenüber zeichnet sich die Lösung gemäß dem Patentanspruch 2 dadurch aus, daß die Steuervorrichtung einen Zufallsgenerator umfaßt, mit dem Tonfolgen und/oder Geräusche zufällig überlagerbar sind. Das erfindungsgemäße Unterhaltungsspielgerät ist somit nicht nur mit einem an sich bekannten Synthesizer ausgestattet, sondern weist zusätzlich einen Zufallsgenerator auf, der die ausgegebenen Tonfolgen und/oder Geräusche zufällig zusammenstellt.

Das erfindungsgemäße Unterhaltungsspielgerät ermöglicht es, den Spieler in beliebige ansprechende Umgebungen zu versetzen und in diesen sein Spiel auszuführen. Dabei kann das erfindungsgemäße Unterhaltungsspielgerät allein auf besondere Animation gerichtet oder aber auch als Geldspielgerät ausgestaltet sein, auf dem zusätzlich dann Gewinne und Verluste in animierender und ansprechender Art dargestellt werden können.

Dient das erfindungsgemäße Unterhaltungsspielgerät nur der Animation, können Ergebnisse erzielt werden, die den Spieler beispielsweise durch besonders ansprechende Bilder oder Bildfolgen belohnen.

Nach einer bevorzugten Ausführungsform ist vorgesehen, daß Speicher, beispielsweise Halbleiterspeicher oder CD-ROM vorgesehen sind, aus denen Rahmen mit unterschiedlichen Szenenabläufen auslesbar sind, die aufeinanderfolgend auf dem Monitor dargestellt werden und durch Betätigung eines Schalters für den von dem Spieler gewünschten Spielablauf wählbar sind. Beispielsweise kann ein Rahmen vorgesehen werden, der den Spieler auf einen Jahrmarkt versetzt.

Der Rahmen stellt das Umfeld des Spielgeschehens, also das Szenario oder den Handlungsrahmen dar. Der Rahmen ist also der bildlich oder in einem Film dargestellte Szenenablauf oder das Handlungsumfeld.

Als Rahmen, in dem ein auswählbares Spiel abläuft, kommt beispielsweise auch ein sportlicher Wettkampf in Betracht. Grundsätzlich können Rahmen vorgegeben werden, in denen sich interessante oder spannende Spielabläufe einbetten lassen.

In weiterer Gestaltung der Erfindung ist vorgesehen, daß jeder Rahmen unterschiedliche Figuren und/oder Motive enthält, die in unterschiedlicher Form zusammentreten oder zusammengesetzt werden können und deren Kombinationen über Gewinn oder Verlust entscheiden und/oder Ergebnisse bilden.

Um dem Spieler einen interaktiven Eintritt in das Spiel oder eine Auswahl des Spiels zu ermöglichen, kann vorgesehen sein, daß zur Bildung einer Kombination von Figuren, einer Kombination von Bildelementen oder Bildsequenzen ein durch ein Bildelement gebildeter Zeiger vorgesehen ist, der willkürlich steuerbar ist. Durch Steuerung dieses Zeigers können zufallsgesteuerte Bildelemente oder Bildsequenzen oder Bildausschnitte gewählt und zusammengestellt werden, die dann über Gewinn oder Verlust entscheiden.

Der Zeiger kann ein willkürlich von dem Spieler betätigbares Steuergerät, beispielsweise eine Mouse, ein Joy-Stick, eine Touch-Screen oder ein Element sein, aus dem der Spieler aktiv die Geschehensabläufe verändern kann. Mit dem Zeiger, der bildlich auf einem Monitor sichtbar sein kann, kann der Spieler auch Entscheidungen abrufen, wobei er auf den Inhalt der Entscheidung nicht unmittelbar Einfluß nehmen kann, sondern diese Entscheidung zufallsgesteuert erfolgt.

Der Zeiger kann durch Tastendruck betätigbar sein, wodurch bestimmte Spielabläufe eingeleitet werden können.

Durch den Zeiger können Kombinationen von Bildelementen und/oder Bildsequenzen angezeigt werden, die dann über Gewinn oder Verlust entscheiden oder ein Ergebnis anzeigen.

Der Zeiger kann durch Tasten aktivierbar oder aber auch durch einen Joystick bewegbar sein.

Die Auswahl von Bildelementen und/oder Figuren kann auch durch ein Touch-Screen erfolgen.

Gewinne und/oder Ereignisse können durch Kombinationen von Figuren gegeben werden, wobei die Figuren zusätzlich auch mit Zahlen versehen werden können, deren Kombinationen wie bei bekannten Geldspielgeräten Gewinne darstellen. Ein Gewinn kann auch durch eine schlüssige Bildsequenz angezeigt werden. Durch den Zufallsgenerator können Bildsequenzen zusammengestellt werden, die sinnlose oder sinnvolle Geschehensabläufe anzeigen. Sinnlose Geschehensabläufe symbolisieren dann einen Verlust, während sinnvolle, also schlüssige Bildsequenzen, unterschiedliche Gewinne oder Ereignisse bedeuten können.

Zu Gewinnen führende Bilder und/oder Motive können Variationen und/oder Veränderungen unterliegen, die das positive Ereignis anzeigen, wobei die Bildfolgen errechnet oder aus angesteuerten Speichern ausgelesen werden können. Entsprechend können zu Verlusten führende Kombinationen durch relative Darstellungen angezeigt werden, beispielsweise enttäuschte Mienen der verlierenden Figur oder das allmähliche Verschwinden dieser Figur aus dem Blickfeld.

Zu Gewinnen oder Verlusten führende Kombinationen von Figuren oder Symbolen können in vergrößerter (gezoomt) oder verkleinerter Form dargestellt werden.

Nach einer besonders vorteilhaften Ausführungsform ist vorgesehen, daß Speicher mit auslesbaren 3-D-Bildern vorgesehen sind, die zufallsgesteuert zu Sequenzen zusammengesetzt werden, die über Gewinn oder Verlust entscheiden.

Ergebnisse können in Form von animierenden Bilddarstellungen und/ oder filmartigen Abläufen gewährt werden, die dem Spieler das freudige Erlebnis vermitteln, sein Spiel erfolgreich abgeschlossen zu haben.

Gewinne können auch in üblicher Form als Geldgewinne oder Sonderspielgewinne gewährt werden.

Weiterhin können durch entsprechende Speicherinhalte Jackpotgewinne bildhaft dargestellt werden, die erzielbar sind.

Zu den gewährbaren Gewinnen zählen auch Jackpotgewinne, Punktund Risikogewinne sowie Freispiele, Zeitgewinne und Bonusgewinne sowie Verringerung von Schwierigkeitsgraden.

Nach einer besonders vorteilhaften Ausgestaltung des erfindungsgemäßen Geldspielgeräts ist vorgesehen, daß das Risiko-spiel bildhaft dargestellt wird.

Zur Ausspielung eines Risikos kann aufgrund eines Speicherwechsels ein Szenenwechsel stattfinden, in dem aufgrund vorgegebener Ereignisse, die möglicherweise auch aktiv eine Mitwirkung des Spielers erfordern, über Gewinn, Gewinnerhöhungen, Verlust oder andere Ereignisse entschieden wird.

Im Risikospiel kann eine Gewinnerhöhung beispielsweise durch störungsfreie und/oder gelungene Geschehensabläufe dargestellt werden. Beispielsweise kann das Risikospiel ein Geschicklichkeitsspiel sein, wobei nur bei positivem Ausgang eine Gewinnsteigerung erfolgt. Bei negativem Ausgang kann auch ein Zusatzgewinnspiel gewährt werden.

Im Sinne des erfindungsgemäßen Unterhaltungsspielgeräts sind sinnvolle Bilder oder Geschehensabläufe solche, die ein in sich verständliches und abgeschlossenes Bild oder einen schlüssigen Handlungsablauf darstellen. Ein sinnvolles Bild ist also auch Puzzle-Elementen zusammengesetzt, bei dem keine Bildelemente an unrichtiger Stelle erscheinen.

Zusatzgewinnspiele können aufgrund der Geschicklichkeit des Spielers bzw. einer Pseudo-Geschicklichkeit gewährt werden, indem der Spieler nach dem Spielablauf vorgegebene, zu Gewinnen oder zu gewinngleichen Ereignissen führende Geschehensabläufe in einer zu einem Erfolg führenden Weise beeinflußt oder beendet.

Ausführungsbeispiele der Erfindung werden nachstehend näher erläutert.

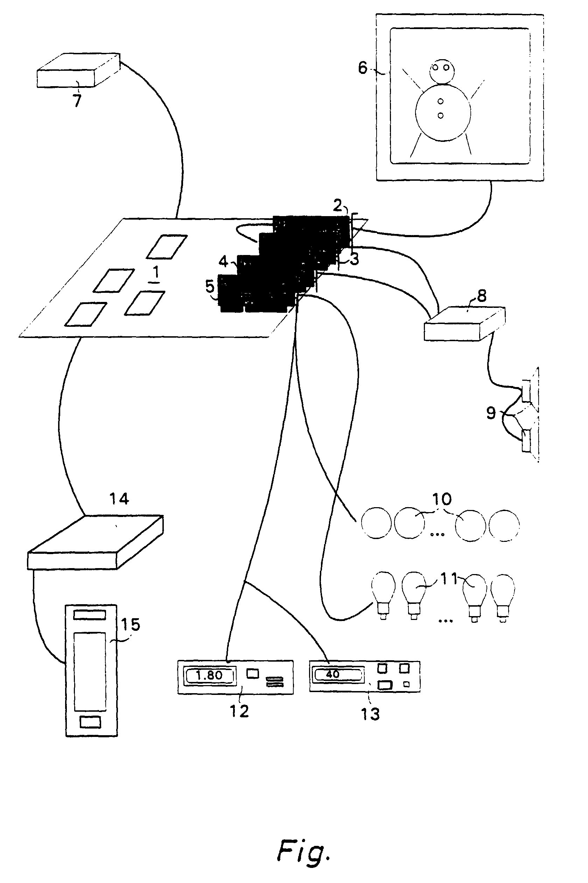

In der einzigen Zeichnungsfigur ist schematisch der Aufbau eines erfindungsgemäßen Unterhaltungsspielgeräts dargestellt.

Das Spielgerät enthält ein PC-Motherboard 1, das in üblicher Weise mit IC, einer Grafikkarte für die Bildschirmausgabe 2, einer Decoderkarte 3 zur Konventierung von Audio und/oder Videosequenzen im MPEG-Format in ein mit der Grafikkarte 2 darstellbares Format und eine Sound-Karte 4 als eine Tonquelle enthält. Weiterhin ist eine Karte 5 zur Ansteuerung der Sonderperipherie (Lampen, Tasten etc.) vorgesehen. Mit der Grafikkarte 2 ist ein VGA-Monitor 6 verbunden.

Weiterhin ist eine Festplatte 7 als Speicher für Programme und nach MPEG kodierte Video- und/oder Audio-Sequenzen sowie für Grafiken und sonstige Daten vorgesehen.

Mit der Soundkarte und der MPEG-Karte ist ein Zwei-Kanal-Stereo-
Audio-Verstärker 8 für die Lautsprecher 9 verbunden.

Über periphäre Bausteine sind mit dem Motherboard Tasten 10 für Spielereingaben und Lampen 11 zu Signal- und Animationszwecken verbunden.

Weiterhin ist ein Display 12 zur Anzeige des Münzspeichers vorgesehen. In üblicher Weise ist ein Display 13 zur Anzeige von Sonderspielen vorgesehen. Mit dem Motherboard 1 ist weiterhin eine Steuereinheit 14 für die Münzanlage 15 vorgesehen. Die Münzanlage mit Steuereinheit sind üblicher Bauweise.

Nach dem Einschalten des Geräts wird zunächst das Betriebssystem geladen und danach direkt das Hauptprogramm, welches die Spielablaufsteuerung enthält. Das Laden des Betriebssystems und des Hauptprogramms weicht insofern von dem Verhalten üblicher Büro-
PC ab, als die bekannten Windows-Oberflächen nicht sichtbar werden, sondern nur die vom Hauptprogramm erzeugten Grafiken bzw. AV-Sequenzen.

In der Leerlaufphase werden zum Spielanreiz Animationen mit Lampen, Grafiken und AV-Sequenzen und - falls gewünscht - auch Werbung und Informationen dargestellt.

Nach erfolgtem Geldeinwurf beginnt ein Spiel von mindestens 15 s Dauer. Der Entscheid über Gewinn oder Verlust erfolgt, wie auch bisher üblich, über Zufallszahlen, die von einem Pseudo-Zufallszahlen-Generator ermittelt werden. Die Darstellung erfolgt jedoch nicht über das Drehen von Walzen oder Scheiben, sondern durch das sinngemäße Abspielen von AV-Sequenzen, die in ihrer Kombination den Spielverlauf darstellen. Bei Gewinn wird eine Risikodarstellung geboten. Der Spieler hat die bekannten Möglichkeiten des Eingriffs über die Tasten Start, Stop und Risiko.

In vorgeschriebenen Pausen können dem Spieler kostenlose Geschicklichkeitsspiele angeboten oder aber AV-Sequenzen mit Unterhaltung und/oder Werbung abgespielt werden.

Die Geräte-Software (beispielsweise auf der Betriebssystemgrundlage Windows) sorgt für das Zusammenspiel der Systemteile, für den Aufbau der Grafik auf dem Bildschirm, das Abspielen der MPEG-Videoteile sowie für Töne und Melodien. Sie verwaltet alle Hardware bezogenen Aktionen im Gerät und bildet die Basis für die Spielsystemsoftware.

Die Spielsystemsoftware stellt den dem Spieler zugewandten Spielablauf dar und reagiert auf die Eingaben des Spielers. Der Spielablauf besteht aus einer Folge von hintereinander abgespielten MPEG Audio- und/oder Videosequenzen. Die Kombinationen werden durch den zufälligen Gewinnspielverlauf und durch Spielereingriff bestimmt.

Die MPEG-AV-Sequenzen werden vorgefertigt und auf der Festplatte des Systemteils gespeichert. Während des Betriebs des Geräts müssen so die entsprechenden Grafiken nicht neu berechnet werden, sondern sie können mittels der MPEG-Decoder-Karte abgespielt werden.

Es ist ein Systemteil für das Geldmanagement, also für den Geldeinwurf und die Münz- und Scheinkontrolle sowie für die Gewinnauszahlung und Gerätestatistik vorgesehen, die auf der herkömmlichen Gerätetechnik basiert.

Weiterhin ist ein Systemteil für die Darstellung des Spielablaufs vorgesehen, der auf der standardisierten PC-Technik beruht.

Wie bereits anhand der Zeichnung erläutert, ist die Basis des Spielgeräts ein PC-Motherboard. Die dauerhafte Speicherung von Programmen und Daten erfolgt auf einer Festplatte. Zusätzlich kann ein Floppy-Disk-Laufwerk vorgesehen werden.

Der Spielablauf wird hauptsächlich durch einen 20-Zoll-Monitor dargestellt, wobei zusätzlich Lampen vorgesehen sein können. Gewinne und Sonderspielstände werden auf LED-Displays und/oder dem Monitor dargestellt. Natürlich ist es möglich, beliebige Informationen an den Spieler, beispielsweise über Spielstand, Gewinnsystem und Risiko, über den Bildschirm auszugeben.

Der Eingriff in den Spielablauf kann über 5 Tasten (Start, Stop und Risiko) erfolgen. Weitere Tasten können die Auswahl des darzustellenden Risikos und des Gewinnspiels ermöglichen.

Bildquelle ist eine Video-Karte mit MPEG-Wiedergabemöglichkeiten, die auch als eine Sound- und Musikquelle dient.

In der erfindungsgemäßen Weise konzipierte Geldspielgeräte können beispielsweise folgende Gestaltungen aufweisen:

Auf dem Monitor erscheint ein Drehkörper, der mit einer Anzahl unterschiedlicher Objekte, beispielsweise 24 Objekten, besetzt ist. Aus diesen Objekten werden zufallsgesteuert Objekte ausgewählt, deren Kombination über Gewinn oder Verlust entscheidet. Das ausgewählte Objekt wird jedoch nicht vom Drehkörper entfernt, sondern verbleibt dort mit einer bestimmten Kennzeichnung. Die Auswahl eines Objekts wird beispielsweise dreimal nacheinander durchgeführt. Die dadurch erhaltene Kombination von drei Objekten wird dann mit einer Liste von Gewinnkombinationen verglichen. Ist die Kombination in der Liste vorhanden, wird ein zugeordneter Gewinn gegeben.

In der konkreten Darstellung kann der Drehkörper beispielsweise ein sogenannter "Taumler" oder ein "Teufelsrad" sein, wie sie auf Jahrmärkten zu finden sind. Zu Beginn des Spiels und nach einem Spiel mit Gewinn fährt eine Kamera aus der Distanz auf das stehende Teufelsrad zu (Zoom), das sich dann zu drehen beginnt. Nach einem Spiel ohne Gewinn senkt sich die Kamera von oben zur Plattform herunter. Die Kamera kann in eine dynamische randomisierte und gegenläufige Umlaufbahn einschwenken, die auch unter die Plattformebene abtauchen kann. Das Teufelsrad kann mit einer umlaufenden Sitzbank versehen sein, die immer in gleicher Anordnung mit sitzenden 3-D-Figuren bestückt ist. Durch Betätigung einer Taste durch den Spieler kann ein bildlich dargestellter Boxhandschuh, der beispielsweise auf einer Spiralfeder gehaltert ist, eine Figur von der Sitzbank schleudern. Dieser Prozeß wird dreimal ausgeführt und nach einem Gewinnplan wird dann die Kombination ausgewertet, wobei die Figuren Brust- und Rückentexturen oder Nummern tragen können, die der Auswertung dienen.

Die Gewinne werden animiert, was bedeutet, daß die Figuren beispielsweise freudige Bewegungen ausführen. Bei einem Nichtgewinn können die Figuren beispielsweise von dannen schlurfen.

Es können beispielsweise etwa 10 verschiedene animierte 3-D-Figuren vorgesehen sein, die witzig oder drollig ausgebildet sein können. Sie können durch unterschiedliche Geldbeträge oder Nummern gekennzeichnet sein.

Der Hintergrund kann einem Vergnügungspark nachempfunden sein, wobei sich über diesem ein Himmel in der Dämmerung mit Sternen oder Mond wölben kann. Spotlights können zur weiteren Animation über den Himmel schweifen.

Als Hintergrundmusik können Jahrmarktsgeräusche zu hören sein.

Sämtliche Ereignisse, insbesondere bei der Auswahl der eine Kombination bildenden Figuren, können entsprechend durch Geräusche untermalt sein.

Als Hintergrundmusik kann auch eine treibende, rhythmische Musik verwendet werden, die in Schleifen beständig durchläuft. Anfang und Ende des Spiels können nur durch Auf- bzw. Abblenden der Musik und Einmischen von Jahrmarktsgeräuschen gekennzeichnet werden.

Geräusche aufgrund von besonderen Ereignissen oder Interaktionen werden über die Hintergrundmusik gelegt.

Die Auswahl einer Figur erfolgt anhand des beschriebenen Beispiels durch einen bildlich dargestellten Boxhandschuh, der auf einer Spiralfeder wippt und in bestimmten Zeitabständen von unten gegen das Teufelsrad boxt. Nach einem solchen Boxhieb verläßt ein animierter Geist die Figur an der Aufprallstelle und zischt wie ein Luftballon gen Himmel. Die Kamera folgt dem Geist, bis er schließlich in der Ferne verschwindet. Das Teufelsrad kann hierbei nach unten aus dem Blickfeld der Kamera hinauswandern. Der Spieler hat die Möglichkeit, durch Tastenbetätigung zu einem bestimmten Zeitpunkt den Boxhandschuh zum Herausboxen einer Figur zu aktivieren.

Da die herauszuschleudernde Figur durch einen Zufallsgenerator ermittelt wird, wird die Aktivierung des Boxhandschuhs derart auf den Zeitpunkt des Tastendrucks abgestimmt, daß in jedem Fall bei dem Spieler der Eindruck eines Treffers oder eines dicht daneben gegangenen Schlages entsteht.

Ein Risiko-Spiel kann beispielsweise folgendermaßen konzipiert sein:

Ein Joker, der sich auch auf einem Einrad befinden oder auf einer Kugel balancieren kann, jongliert mit drei Bällen. Der Spieler wirft dem Joker, beispielsweise auf dessen Kopfnicken oder ein Handzeichen oder einen Zuruf hin, einen weiteren Ball zu, den dieser zu fangen und in seine Jongliererei zu integrieren versucht. Gelingt es dem Joker, den Ball in seine Jongliererei zu integrieren, wird der nächste Level erreicht. Der Joker kann dann weiter mit vier Bällen jonglieren oder aber einen ablegen und dann den nächsten Ball erwarten. Mißlingt dem Joker das Jonglieren, stürzen die Bälle ab, was dann "nichts gewonnen" bedeutet. Auch der Joker kann mit unterschiedlichen Ramponierungsgraden aus unterschiedlichen Höhen abstürzen. Der Joker kann sich dann wieder aufrappeln und je nach Zufallsentscheid eine enttäuschte, bedauernde, ärgerliche oder selbstkritische Geste machen.

Wird das Risikospiel vom Spieler abgebrochen, beendet der Joker seine Vorführung sanft und steigt erleichert von seinem Podest ab.

Die Entscheidung, ob dem Joker sein Spiel gelingt oder mißlingt, wird zuvor von dem Zufallszahlengenerator gefällt. Der Spieler wirft den Ball zu einem Zeitpunkt, den er für geeignet hält, der aber die Zufallsentscheidung nicht beeinflußt.

Wird in das Risikospiel übergeblendet, kann der Joker möglichst groß und bildschirmfüllend gezeigt werden. Die unterschiedlichen Stufen des Risikos, wobei beispielsweise 10 Stufen vorgesehen sein können, werden klar und deutlich angezeigt, wobei der Joker höher steigen kann oder Schatten oder Spiegeleffekte die Höhe der erklommenen Stufen anzeigen. Die positiven Ereignisse oder Interaktionen werden über die Grundmusik gelegt.

Ein Joker kann auch auf einer Treppe stehen, auf deren Stufen die jeweils erreichbaren Gewinne zu sehen sind. Der Joker steht auf einer dieser Stufen und jongliert mit brennenden Fackeln. Auf derselben Stufe befinden sich eine Kanone und ein Wasserschlauch. Kanone und Wasserschlauch werden im Rythmus des Risikospiels von einem Scheinwerfer angestrahlt. Ist beim Auslösen des Risikoschritts die Kanone beleuchtet, so verschießt diese eine brennende Fackel, welche der Joker auffängt und in sein Jonglieren integriert. Anschließend wirft der Joker eine der Fackeln ab und springt auf die nächsthöhere Stufe, was 'Gewinn' bedeutet. Ist dagegen der Wasserschlauch angestrahlt, so spritzt diese den Joker naß. Die Fackeln gehen aus und der Joker fällt die Treppe hinunter, was 'Verlust' bedeutet.

Nach einer anderen Variante kann das Risikospiel beispielsweise folgendermaßen konzipiert sein:

Dem Spieler wird eine Tunnelfahrt mit Verzweigungsmöglichkeiten nach oben und unten simuliert. Dabei kann das Thema aus dem Umfeld Geisterbahn, Grotte oder Achterbahn gewählt sein. Inhaltlich können beispielsweise drei Sequenzen zur Verfügung gestellt werden, die über Erfolg oder Mißerfolg entscheiden:
Geradeausfahrt in Richtung auf einen Entscheidungspunkt zu;
Bergfahrt, wobei eine höhere Gewinnstufe erreicht wurde;
Talfahrt mit Absturz, was den Verlustfall bedeutet.

Das tunnelorientierte Risikospiel kann auch in der Weise ablaufen, daß ein Wagen auf einer Drehscheibe fährt, welche sich zu drehen beginnt. Von der Scheibe gehen sternförmig Tunnelröhren ab, welche Türen oder Schotten haben, auf denen Gewinn- oder Verlustsymbole angebracht sind.

Die Entscheidung wird von einem Zufallsgenerator gefällt, wobei dem Spieler ein Eingriff durch eine Taste ermöglicht wird, die aber die bereits getroffene Zufallsentscheidung nicht zu beeinflussen vermag.

## Patentansprüche

1. Unterhaltungsspielgerät
mit einer Anzeigevorrichtung,
mit einer Datenquelle und/oder mit einem Massenspeicher und
mit einer die Anzeigevorrichtung ansteuernden Steuereinrichtung, mit der von der Datenquelle gelieferte und/oder von dem Massenspeicher abrufbare Bildelemente auf der Anzeigevorrichtung darstellbar sind,
**dadurch gekennzeichnet,**
daß die Bildelemente zu filmartigen Szenenabläufen zusammensetzbar sind, und
daß die Steuervorrichtung einen Zufallsgenerator umfaßt, mit dem die Zusammensetzung der Bildelemente innerhalb der Szenenabläufe und/oder die Reihenfolge der Szenenabläufe zufällig steuerbar ist.

2. Unterhaltungsspielgerät
mit einem Lautsprecher,
mit einer Datenquelle und/oder mit einem Massenspeicher und
mit einer den Lautsprecher ansteuernden Steuereinrichtung, mit der von der Datenquelle gelieferte und/oder von dem Massenspeicher abrufbare Tonfolgen und/oder Geräusche auf dem Lautsprecher abspielbar sind,
**dadurch gekennzeichnet,**
daß die Steuervorrichtung einen Zufallsgenerator umfaßt, mit dem die Tonfolgen und/oder Geräusche zufällig überlagerbar sind.

3. Unterhaltungsspielgerät nach Anspruch 1 oder 2, dadurch gekennzeichnet, daß es als Geldspielgerät ausgebildet und mit Münzeingabe- und - ausgabeeinheiten, mit Gewinnanzeige- und -speichereinrichtungen und zusätzlich mit einer in einem Speicher enthaltenen Gewinntabelle, die aufgrund eines vorgegebenen Gewinnplans durch Vergleich mit der jeweils erzielten Kombination über Gewinn oder Verlust entscheidet, versehen ist.

4. Unterhaltungsspielgerät nach einem der Ansprüche 1 bis 3, dadurch gekennzeichnet, daß Speicher (Halbleiterspeicher und/oder CD-ROM und/oder Festplatte) vorgesehen sind, aus denen Spielrahmen mit unterschiedlichen Szenenabläufen auslesbar sind, die aufeinanderfolgend auf dem Bildschirm dargestellt werden und durch Betätigung eines Schalters für den gewünschten Spielablauf wählbar sind.

5. Unterhaltungsspielgerät nach Anspruch 4, dadurch gekennzeichnet, daß jeder Rahmen unterschiedliche Figuren und/oder Motive oder Tönen enthält, deren durch den Zufallsgenerator ausgewählten Kombinationen über animierende Ergebnisse oder über Gewinn oder Verlust entscheiden.

6. Unterhaltungsspielgerät nach einem der Ansprüche 1 bis 5, dadurch gekennzeichnet, daß zur Bildung einer Kombination von Figuren, von Bildelementen und/oder von Bildsequenzen und/oder Motiven und/oder Tönen ein durch ein Bildelement gebildeter Zeiger vorgesehen ist, der willkürlich aktivierbar und/oder steuerbar und/oder zufallsgesteuert aktivierbar ist.

7. Unterhaltungsspielgerät nach Anspruch 6, dadurch gekennzeichnet, daß der Zeiger durch Tasten aktivierbar oder durch einen Joystick bewegbar ist.

8. Unterhaltungsspielgerät nach einem der Ansprüche 1 bis 6, dadurch gekennzeichnet, daß eine durch ein Bildelement dargestellte Entscheidungsmöglichkeit vorgesehen ist.

9. Unterhaltungsspielgerät nach einem der Ansprüche 1 bis 5, dadurch gekennzeichnet, daß eine Pseudo-Auswahl von Bildelementen durch einen Touch-Screen oder Tastendruck erfolgt.

10. Unterhaltungsspielgerät nach einem der Ansprüche 1 bis 9, dadurch gekennzeichnet, daß eine schlüssige (sinnvolle) Bildsequenz einen Gewinn anzeigt.

11. Unterhaltungsspielgerät nach einem der Ansprüche 1 bis 10, dadurch gekennzeichnet, daß zu Gewinnen führende Bilder und/oder Motive das positive Ereignis anzeigenden Veränderungen (freudige Regungen) unterliegen, die durch Rechner erzeugt oder aus angesteuerten Speichern ausgelesen werden.

12. Unterhaltungsspielgerät nach einem der Ansprüche 1 bis 11, dadurch gekennzeichnet, daß zu Verlusten führende Bilder und/oder Motive durch das negative Ereignis darstellende Variationen und/oder Veränderungen angezeigt werden, die durch Rechner erzeugt oder aus angesteuerten Speichern ausgelesen werden.

13. Unterhaltungsspielgerät nach einem der vorhergehenden Ansprüche, dadurch gekennzeichnet, daß zu Gewinnen oder Verlusten führende Kombinationen in vergrößerter (Zoom) oder verkleinerter Form dargestellt werden.

14. Unterhaltungsspielgerät nach einem der vorhergehenden Ansprüche, dadurch gekennzeichnet, daß Speicher mit auslesbaren 3-D-Bildern vorgesehen sind, die rechnergesteuert zu Bildsequenzen unterschiedlicher Inhalte zusammengesetzt werden.

15. Unterhaltungsspielgerät nach einem der vorhergehenden Ansprüche, dadurch gekennzeichnet, daß Gewinne in Form von animierenden Bilddarstellungen und/oder Abläufen gewährt werden.

16. Unterhaltungsspielgerät nach einem der vorhergehenden Ansprüche, dadurch gekennzeichnet, daß Gewinne in üblicher Form als Geldgewinne oder Sonderspielgewinne gewährt werden.

17. Unterhaltungsspielgerät nach einem der vorhergehenden Ansprüche, dadurch gekennzeichnet, daß besondere bildhaft dargestellte Jackpotgewinne erzielbar sind.

18. Unterhaltungsspielgerät nach einem der vorhergehenden Ansprüche, dadurch gekennzeichnet, daß das Risikospiel bildhaft dargestellt wird.

19. Unterhaltungsspielgerät nach Anspruch 18, dadurch gekennzeichnet, daß zur Ausspielung eines Risikos ein Szenenwechsel stattfindet.

20. Unterhaltungsspielgerät nach Anspruch 18 oder 19, dadurch gekennzeichnet, daß im Risikospiel Gewinnsteigerungen durch störungsfreie und/oder gelungene Geschehensabläufe dargestellt werden.

21. Unterhaltungsspielgerät nach einem der vorhergehenden Ansprüche, dadurch gekennzeichnet, daß im Risikospiel ein Verlust durch Beendigung oder Zusammenbruch der Darstellung angezeigt wird.

22. Unterhaltungsspielgerät nach einem der vorhergehenden Ansprüche, dadurch gekennzeichnet, daß Sonderausspielungen aufgrund eines Szenenwechsels erfolgen.

23. Unterhaltungsspielgerät nach einem der vorhergehenden Ansprüche, dadurch gekennzeichnet, daß Risikospiele und/oder Sonderausspielungen aufgrund echter Geschicklichkeitsspiele erfolgen.

## Claims

1. Game apparatus for entertainment,
having a display device,
having a data source and/or
having a mass storage device and having a control device,
which drives the display device and enables image elements that are supplied from the data source and/or can be called up from the mass storage device to be presented on the display device,
characterized in that the image elements can be combined to form film-like scene progressions, and in that the control device comprises a random number generator by means of which the combination of the image elements within the scene progressions and/or the order of the scene progression can be controlled randomly.

2. Game apparatus for entertainment,
having a loudspeaker,
having a data source and/or
having a mass storage device
and having a control device, which drives the loudspeaker and enables sound sequences and/or noises that are supplied from the data source and/or can be called up from the mass storage device to be played back on the loudspeaker,
characterized
in that the control device comprises a random number generator by means of which the sound sequences and/or noises can be randomly superposed.

3. Game apparatus for entertainment according to Claim 1 or 2, characterized in that it is designed as a play-for-money game apparatus and is provided with coin insertion and dispensing units, with win display and storage devices and, in addition, with a win table which is contained in a store and, on the basis of a predetermined win plan, decides about win or loss by comparison with the combination obtained in each case.

4. Game apparatus for entertainment according to one of Claims 1 to 3, characterized in that stores (semiconductor memory and/or CD-ROM and/or hard disk) are provided from which game settings with different scene progressions can be read which are presented successively on the screen and can be selected by actuation of a switch for the desired game progression.

5. Game apparatus for entertainment according to Claim 4, characterized in that each setting contains different figures and/or motifs or sounds whose combinations which are selected by the random number generator decide about stimulating results or about win or loss.

6. Game apparatus for entertainment according to one of Claims 1 to 5, characterized in that in order to form a combination of figures, of image elements and/or of image sequences and/or motifs and/or sounds, provision is made of a pointer which is formed by an image element, can be arbitrarily activated and/or controlled and/or can be activated in a randomly controlled manner.

7. Game apparatus for entertainment according to Claim 6, characterized in that the pointer can be activated by keys or can be moved by a joystick.

8. Game apparatus for entertainment according to one of Claims 1 to 6, characterized in that a decision possibility represented by an image element is provided.

9. Game apparatus for entertainment according to one of Claims 1 to 5, characterized in that a pseudo-selection of image elements is effected by means of a touchscreen or key pressing.

10. Game apparatus for entertainment according to one of Claims 1 to 9, characterized in that a logical (meaningful) image sequence indicates a win.

11. Game apparatus for entertainment according to one of Claims 1 to 10, characterized in that motifs and/or images leading to wins are subject to alterations (joyful movements) which indicate the positive event and are generated by computer or read from addressed stores.

12. Game apparatus for entertainment according to one of Claims 1 to 11, characterized in that motifs and/or images leading to losses are indicated by alterations and/or variations which represent the negative event and are generated by computer or read from addressed stores.

13. Game apparatus for entertainment according to one of the preceding claims, characterized in that combinations leading to wins or losses are presented in an enlarged form (zoom) or size-reduced form.

14. Game apparatus for entertainment according to one of the preceding claims, characterized in that provision is made of stores containing 3-D images which can be read out and are combined under computer control to form image sequences having different contents.

15. Game apparatus for entertainment according to one of the preceding claims, characterized in that wins are awarded in the form of stimulating image presentations and/or progressions.

16. Game apparatus for entertainment according to one of the preceding claims, characterized in that wins are awarded in the usual form as cash wins or special game wins.

17. Game apparatus for entertainment according to one of the preceding claims, characterized in that special pictorially presented jackpot wins can be obtained.

18. Game apparatus for entertainment according to one of the preceding claims, characterized in that the risk game is presented pictorially.

19. Game apparatus for entertainment according to Claim 18, characterized in that in order to play a risk, a scene change takes place.

20. Game apparatus for entertainment according to Claim 18 or 19, characterized in that, in the risk game, win increases are represented by disruption-free and/or successful event progressions.

21. Game apparatus for entertainment according to one of the preceding claims, characterized in that, in the risk game, a loss is indicated by the termination or breakdown of the presentation.

22. Game apparatus for entertainment according to one of the preceding claims, characterized in that instances of special playing are effected on the basis of a scene change.

23. Game apparatus for entertainment according to one of the preceding claims, characterized in that risk games and/or instances of special playing are effected on the basis of genuine qames of skill.

## Revendications

1. Appareil de jeu de divertissement
comportant un dispositif d'affichage,
ainsi qu'une source de données et/ou une mémoire de grande capacité et
une installation de commande commandant le dispositif d'affichage, moyennant laquelle des éléments d'image livrés par la source de données et/ou pouvant être appelés de la mémoire de grande capacité, peuvent être représentés sur le dispositif d'affichage,
caractérisé en ce que
les éléments d'image peuvent être composés en déroulements de scènes à la manière d'un film, et
que l'installation de commande comprend un générateur au hasard moyennant lequel la composition des éléments d'image à l'intérieur des déroulements de scènes et/ou l'ordre chronologique des déroulements de scènes peuvent être commandés au hasard.

2. Appareil de jeu de divertissement
comportant un haut-parleur,
ainsi qu'une source de données et/ou une mémoire de grande capacité et
une installation de commande commandant le haut-parleur, moyennant laquelle des séquences de sons et/ou des bruits livrés par la source de données et/ou pouvant être appelés de la mémoire de grande capacité, peuvent être reproduits par le haut-parleur,
caractérisé en ce que
l'installation de commande comprend un générateur au hasard, moyennant lequel les séquences de sons et/ou les bruits peuvent être superposés au hasard.

3. Appareil de jeu de divertissement selon les revendications 1 ou 2, caractérisé en ce qu'il est formé comme appareil de jeu à sous et pourvu d'entrées et de sorties de monnaies, comportant des installations d'affichage et de mémoire de gains et comportant par ailleurs un tableau de gains contenu dans une mémoire, qui , moyennant un plan de gains prédéterminé, décide par la comparaison avec la combinaison obtenue, du gain ou de la perte.

4. Appareil de jeu de divertissement selon l'une quelconque des revendications 1 à 3, caractérisé en ce que des mémoires (mémoire à semi-conducteur et/ou CD-ROM et/ou disque dur) sont prévues à partir desquelles des cadres de jeu comportant des déroulements de scènes différents peuvent être lus, cadres qui sont représentés l'un après l'autre sur l'écran et qui peuvent être sélectionnés par l'actionnement d'un commutateur pour le déroulement de jeu souhaité.

5. Appareil de jeu de divertissement selon la revendication 4, caractérisé en ce que chaque cadre comporte des personnages et/ou des motifs ou des sons différents dont les combinaisons choisies par le générateur au hasard décident des résultats d'animation ou des gains ou des pertes.

6. Appareil de jeu de divertissement selon les revendications 1 à 5, caractérisé en ce que pour former une combinaison de personnages, d'éléments d'images et/ou de séquences d'images et/ou de motifs et/ou de sons, une aiguille formée par un élément d'image est prévue, qui peut être activée arbitrairement et/ou par commande et/ou par commande au hasard.

7. Appareil de jeu de divertissement selon la revendication 6, caractérisé en ce que l'aiguille peut être activée par des touches et/ou mue par un manche pilote.

8. Appareil de jeu de divertissement selon l'une quelconque des revendications 1 à 6, caractérisé en ce qu'une possibilité de décision représentée par un élément d'image est prévue.

9. Appareil de jeu selon l'une quelconque des revendications 1 à 5, caractérisé en qu'une pseudo-sélection d'éléments d'image se fait par un écran tactile ou par pression sur une touche.

10. Appareil de jeu de divertissement selon l'une quelconque des revendications 1 à 9, caractérisé en ce qu'une séquence d'images cohérente (sensée) affiche un gain.

11. Appareil de jeu de divertissement selon l'une quelconque des revendications 1 à 10, caractérisé en ce que des images et/ou des motifs conduisant à des gains sont soumis à des modifications (excitations joyeuses) qui sont produites par des calculateurs ou qui sont lues à partir de mémoires adressées.

12. Appareil de jeu de divertissement selon l'une quelconque des revendications 1 à 11, caractérisé en ce que des images et/ou des motifs conduisant à des pertes sont affichés par des variations et/ou des changements représentant l'événement négatif, qui sont produits par des calculateur ou qui sont lus à partir de mémoires adressées.

13. Appareil de jeu de divertissement selon l'une quelconque des revendications précédentes, caractérisé en ce des combinaisons conduisant à des gains ou à des pertes sont représentées en forme agrandie (zoom) ou en forme réduite.

14. Appareil de jeu de divertissement selon l'une quelconque des revendications précédentes, caractérisé en ce que des mémoires comportant des images tridimensionnelles pouvant être lues sont prévues, lesquelles images pouvant être commandées par calculateur pour former des séquences d'images de contenus différents.

15. Appareil de jeu de divertissement selon l'une quelconque des revendications précédentes, caractérisé en ce que des gains sont octroyés sous forme de représentations d'images et/ou de séquences d'animation.

16. Appareil de jeu de divertissement selon l'une quelconque des revendications précédentes, caractérisé en ce que les gains sont octroyés en tant que gains en espèces dans la forme habituelle ou en tant que gains de jeux spéciaux.

17. Appareil de jeu de divertissement selon l'une quelconque des revendications précédentes, caractérisé en ce que des gros lots spéciaux dont la représentation est imagée peuvent être remportés.

18. Appareil de jeu de divertissement selon l'une quelconque des revendications précédentes, caractérisé en ce que la représentation du jeux à risque est imagée.

19. Appareil de jeu de divertissement selon la revendication 18, caractérisé en ce que pour l'exécution d'un jeu à risque un changement de scène a lieu.

20. Appareil de jeu de divertissement selon les revendications 18 ou 19, caractérisé en ce que dans le jeu à risque des augmentations de gains sont représentées par des déroulements d'événements sans perturbation et/ou réussis.

21. Appareil de jeu de divertissement selon l'une quelconque des revendications précédentes, caractérisé en ce que dans le jeu à risque une perte est affichée par l'interruption ou l'effondrement de la représentation.

22. Appareil de jeu de divertissement selon l'une quelconque des revendications précédentes, caractérisé en ce que l'exécution de jeux spéciaux est déterminée par des changements de scène.

23. Appareil de jeu de divertissement selon l'une quelconque des revendications précédentes, caractérisé en ce que des jeux à risque et/ou jeux spéciaux sont déterminés par d'authentiques jeux d'adresse.
